# EUROPÄISCHE PATENTSCHRIFT

(11) **EP 0 813 481 B1**
(45) Veröffentlichungstag und Bekanntmachung des Hinweises auf die Patenterteilung: **29.12.1999**
(21) Anmeldenummer: 96905843.7
(22) Anmeldetag: 01.03.1996
(51) Int. Cl.: B60T 8/00, G01L 11/00, H01F 7/18

(54) **BREMSDRUCKREGELANLAGE**
BRAKING PRESSURE REGULATOR
SYSTEME DE REGULATION DE LA PRESSION DE FREINAGE

(30) Priorität: 09.03.1995 DE 19508329
(43) Veröffentlichungstag der Anmeldung: 29.12.1997
(73) Patentinhaber: Continental Teves AG & Co. oHG, 60488 Frankfurt (DE)
(72) Erfinder: ZAVISKA, Dalibor, D-65760 Eppstein (DE); VOLZ, Peter, D-64291 Darmstadt (DE)
(86) Internationale Anmeldenummer: EP9600857
(87) Internationale Veröffentlichungsnummer: WO9628325

(56) Entgegenhaltungen:
- EP-A- 0 627 350
- WO-A-93/08055
- DE-A- 2 021 185
- DE-A- 2 257 236
- DE-A- 3 446 016
- DE-A- 4 121 470
- DE-A- 4 440 531
- GB-A- 2 182 740

## Beschreibung

Die Erfindung bezieht sich auf eine Bremsdruckregelanlage mit einem Bremsdruckgeber, einer Bremsbetätigunseinrichtung für mindestens ein Fahrzeugrad, einer Verbindungsleitung zwischen dem Bremsdruckgeber und der Bremsbetätigungseinrichtung, einem Sperrventil in der Verbindungsleitung, das zwei Schaltstellungen aufweist, wobei es in der Grundstellen die Verbindungsleitung offenhält und in seiner Schaltstellung die Verbindungsleitung schließt bzw. drosselt, mit einer Auslaßleitung, die die Bremsbetätigungseinrichtung mit einem Druckmittelsammler verbindet, einem elektromagnetisch betätigtem Druckbegrenzungsventil in der Auslaßleitung, dessen Öffnungsdruck einstellbar ist, mit einem Raddrehzahlsensor, der die Drehgeschwindigkeit des Fahrzeugrades erfaßt und ein entsprechendes Sensorsignal abgibt, und einer elektronischen Steuer- und Auswerteeinheit, die einen Eingang für das Sensorsignal aufweist und einen ersten Ausgang (Schaltausgang) aufweist, an dem ein Schaltsignal für das Sperrventil anliegt, und mit einem weiteren Ausgang (Stellausgang), an dem ein Steuersignal für den Stromversorgungskreis anliegt, das die Stromstärke bestimmt, mit dem der Elektromagnet des elektromagnetisch betätigten Druckbegrenzungsventil versorgt wird.

Eine derartige Bremsanlage ist in der DE-OS 20 21 185 beschrieben. In der dort vorgestellten Bremsdruckregelanlage ist ein Druckbegrenzungsventil vorgesehen, das von einem Proportionalmagneten betätigt wird. Ein Proportionalmagnet ist dadurch gekennzeichnet, daß unabhänig von der Lage des Ankers in der Spule die auf den Anker ausgeübte Kraft proportional zum Spulenstrom ist. Wird ein derartiger Magnet zum Betätigen eines Ventilschließgliedes eingesetzt, so wird die Schließkraft allein vom Spulenstrom bestimmt unabhängig davon, wie weit das auströmende Druckmedium das Schließglied vom Ventilsitz entfernt.

Im genannten Stand der Technik, wird das Schließglied von einer kräftigen Feder auf dem Ventilsitz gehalten, so daß der Öffnungsdruck des Druckregelventils über dem maximal denkbaren Bremsdruck liegt, bei dem das Rad noch nicht blockiert. Die Stellkraft, die von dem Elektromagneten erzeugt wird, bewirkt, daß mit wachsender Stromstärke der Öffnungsdruck gesenkt wird.

Ein derartiges Druckregelventil soll ein entsprechendes Schaltventil in der Ausgangsleitung ersetzen. Die üblicherweise in der Auslaßleitung eingesetzten Schaltventile kennen nur zwei Schaltstellungen, nämlich eine geöffnete und eine geschlossene Stellung. Eine Druckreduzierung wird erzielt, indem das Schaltventil in Intervallen kurzzeitig geöffnet wird, bis der Druck ausreichend abgesenkt ist. Es liegt auf der Hand, daß mit einem Druckregelventil eine wesentlich feinfühligere Regelung möglich ist, da der gewünschte Druck unmittelbar eingestellt werden kann. Voraussetzung hierfür ist aber eine genaue Kenntnis der Regelvorgänge sowie die Verwendung einer elektronischen Auswerteeinheit, die unter Berücksichtigung von Sensorsignalen und mit Kenntnis über die Regelvorgänge entsprechende Steuersignale für die Bestromung des Elektromagneten des Bremsdruckregelventils ermittelt.

In Antiblockierregelanlagen wird häufig lediglich die erste zeitliche Ableitung der Drehgeschwindigkeit des Rades (die Radverzögerung) für die Steuerung des Regelvorganges genutzt.

Übersteigt die Radverzögerung einen negativen Schwellenwert, so spricht die Abtiblockierregelung an, indem Druckmittel aus der Radbremse entnommen wird.

Schon früh wurde festgestellt, daß eine Regelung, die lediglich die Radverzögerung berücksichtigt, keine guten Ergebnisse liefert. Es wurde daher vorgeschlagen, die Schlupfwerte des Rades zu erfassen und den Bremsdruck so einzuregeln, daß der Schlupf des Rades in einem Bereich liegt, in dem die Kraftschlußbeiwerte maximal sind. Zur Bestimmung des Radschlupfes ist es aber notwendig, die Fahrzeuggeschwindigkeit zu kennen. Diese ist aber während eines Bremsvorganges, bei dem die Räder des Fahrzeuges nicht frei rollen, nur schwer zu bestimmen. Es wurden daher fiktive Geschwindigkeiten eingeführt, mit deren Hilfe angenäherte Schlupfwerte ermittelt werden konnten.

In der GB 2 182 740 A wurde schon vorgeschlagen, den Druck in der Radbremse während einer Bremsdruckregelung zu messen. Der Druck ist proportional zu der von der Bremsbetätigungseinrichtung ausgeübten Bremskraft. Unter Berücksichtigung der Radverzögerung läßt sich die Kraft, die zwischen Reifen und Fahrbahn wirkt, ermitteln. Wird der letztgenannte Wert für alle vier Räder aufsummiert, und durch die Fahrzeugmasse dividiert, erhält man die Fahrzeugverzögerung. Aus diesem Wert läßt sich durch eine zeitliche Integration die Geschwindigkeit des Fahrzeuges zu jedem Zeitpunkt der Bremsung ermitteln. Da die Raddrehgeschwindigkeit ebenfalls durch die Auswertung der Radsensorsignale bekannt ist, läßt sich der Schlupf der Räder berechnen.

In der genannten Offenlegungsschrift wird daher ein zusätzlicher Drucksensor eingesetzt.

In der DE 34 46 016 A1 wird ein Verfahren zur Ermittlung eines optimalen Schlupfwertes vorgestellt. Auch hier wird vorgeschlagen, die Fahrzeuggeschwindigkeit zu ermitteln. Dazu soll der Druck im Hauptbremszylinder und die Raddrehgeschwindigkeit gemessen werden. Eine Verbesserung und Vereinfachung der Identifizierung des optimalen Bremsschlupfes soll erreicht werden können durch die Messung des Drucks im Radbremszylinder und der Fahrzeuggeschwindigkeit. Eine Meßmethode wird nicht angegeben.

Aus der DE-A-2,257,236 ist bereits ein Hydraulikkreis für die Verwendung in einem Antiblockierregler bekannt. Das an einem Magnetventil herrschende Druckverhältniss wird bei einer sprunghaften Veränderung des am Magnetventil anstehenden Steuerstroms erkannt, da die sprunghafte Veränderung des Steuerstroms als an einem Widerstand auftretender Spannungssprung zu einem Differenzierglied gelangt. Die Zeitspanne vom Anlegen der Spannung bis zur Veränderung des Steuerstroms ist vom Druck an der Radbremse abhängig.In einem Wandler wird aus dieser Zeitspanne ein proportionale Spannung erzeugt, die als Drucksignal dem Steuergerät zugeführt wird.

Die Erfindung beruht daher auf der Aufgabe, mit geringem zusätzlichem Aufwand Größen für die oben genannten Berechnungsmethoden oder anderen Methoden, die den Bremsdruckregelvorgang verfeinern sollen, zur Verfügung zu stellen.

Die Aufgabe wird für eine Bremsdruckregelanlage der angegebenen Art durch die kennzeichnendenMerkmale des Patentanspruchs 1 gelöst.

Bei diesem Vorschlag wird ausgenutzt, daß sich durch die Bewegung des Ankers, der mit dem Ventilschließglied verbunden ist, eine Änderung der Induktion der Spule verknüpft ist. Änderungen von Indukionen in einem Schwingkreis bewirken aber Strom- und Spannungsänderungen, die meßbar sind.

Eine deutliche Bewegung des Schließgliedes bzw. des Ankers liegt immer dann vor, wenn der Druck in der Bremsbetätigungseinrichtung, das ist der Bremsdruck, den Öffnungsdruck des Druckregelventils erreicht. Dies kann der Fall sein, wenn der Druck in der Bremsbetätigungseinrichtung ansteigt und beim Erreichen des Öffnungsdruckes das Ventil aufgestoßen wird. Die andere Möglichkeit besteht darin, daß der Öffnungsdruck zunächst unterhalb des Druckes in der Betätigungseinrichtung liegt. Druckmittel strömt über das offene Druckregelventil solange ab, bis der Öffnungsdruck erreicht ist und das Ventil wieder schließt.

In beiden Fällen entspricht der Druck in der Betätigungseinrichtung zum Zeitpunkt des Schließens oder des Öffnens des Ventils dem jeweils eingestellten Öffnungsdruck. Dieser wiederum wird bestimmt von der Spulenstromstärke. Verknüpft man also das Signal der oben genannten Meßeinrichtung mit deren Hilfe der Öffnungs- und Schließvorgang erkannt werden kann mit der zu diesen Zeitpunkten vorliegenden Stromstärke, so erhält man eine Information über den Druck in der Bremsbetätigungseinrichtung. Daraus folgt, daß ein zusätzlicher Drucksensor nicht notwendig ist. Die entsprechende Meßeinrichtung kann auf elektronischem Wege sehr einfach realisiert werden.

Mit Hilfe des Radbremsdruckes kann, wie in der britischen Offenlegungschrift beschrieben, sehr einfach die momentane Fahrzeuggeschwindigkeit ermittelt werden, und so letztlich eine Bestimmung des Bremsschlupfes erfolgen.

Darüberhinaus kann auch der Hauptbremszylinderdruck bestimmt werden, ohne daß ein zusätzlicher Sensor notwendig wäre. Ein Regelvorgang besteht aus verschiedenen Phasen nämlich einer Druckabbauphase, einer Haltephase und einer Druckaufbauphase. Eine Druckabbauphase wird dadurch realisiert, daß das Sperrventil die Verbindungsleitung schließt und das Druckbegrenzungsventil mit einem Strom beaufschlagt wird, der dazu führt, daß der Öffnungsdruck gesenkt wird. Sobald der Öffnungsdruck kleiner ist als der momentane Bremsdruck öffnet das Druckregelventil und es fließt Druckmittel aus der Bremsbetätigungseinrichtung ab. Das Druckregelventil schließt erst dann wieder, wenn der Bremsdruck dem Öffnungsdruck entspricht. Dieser Druckwert kann in der Steuer- und Auswerteeinheit gespeichert werden. Dieser Vorgang wiederholt sich, bis die Radverzögerung unter einem bestimmten Schwellenwert abgesenkt ist. Dann kann sich eine Haltephase bzw. eine Druckaufbauphase anschließen. Der zuletzt gespeicherte Druckwert entspricht dem Bremsdruck zu Beginn einer derartigen Phase.

Schon in der Haltephase kann der Öffnungsdruck des Druckregelventils wieder erhöht werden. Dies hat noch keine Steigerung des Bremsdrucks zur Folge, da das Sperrventil weiterhin geschlossen bleibt. Erst durch Öffnen des Sperrventils kann wieder Druckmittel in die Betätigungseinrichtung nachfließen. Dies führt zu einer Druckerhöhung bis der Öffnungsdruck des Druckregelventils erreicht ist. Der Öffnungsvorgang kann wie oben erläutert, registriert werden und der entsprechende Öffnungsdruck, der dem zu der Zeit vorliegendem Bremsdruck entspricht, gespeichert werden. Aus dem Bremsdruck zu Beginn der Haltephase und dem zuletzt gemessenen Bremsdruck kann die Druckerhöhung in der Radbremse festgestellt werden: Bekannt ist weiterhin die Öffnungsdauer des Sperrventils. Auch die Drosselcharakteristik des Sperrventils ist bekannt. Daraus läßt sich der Druck in dem Bremsdruckgeber errechnen. Um nämlich eine bestimmte Bremsdrucksteigerung hervorzurufen, muß eine bestimmte Druckmittelmenge über das Sperrventil in die Bremsbetätigungseinrichtung einfließen. Die dazu zur Verfügung stehende Zeit wird durch die Öffnungsdauer des Sperrventils bestimmt. Zwischen der pro Zeiteinheit einfließenden Druckmittelmenge und der Differenz zwischen dem Druck in der Bremsbetätigungseinrichtung und dem Druck im Bremsdruckgeber besteht ein Zusammenhang. Aus diesem Zusammenhang läßt sich der Druck im Bremsdruckgeber ermitteln.

Diese zusätzlichen Informationen können in die Berechnung des Regelvorganges einfließen.

Es ist bekannt, daß die Güte einer Regelung abhängt von der Geschwindigkeit mit der der Bremsdruck auf- bzw. abgebaut wird und der Länge der Druckhaltephasen. Diese Parameter sind zu ändern je nachdem, ob die Bremsung auf hohem oder niedrigem Reibwert erfolgt. Ein Maß für den Reibwert ist der eingeregelte Bremsdruck unter Berücksichtigung des Fahrzeuggewichts. Der Bremsdruck ist wie oben erläutert bestimmbar. Das Fahrzeuggewicht läßt sich mit Sensoren bestimmen. Somit lassen sich die zeitlichen Gradienten des Bremsdruckaufbaus und -abbaus bestimmen. Wie schon erläutert erfolgt ein Bremsdruckabbau, indem die Spule des Betätigungsmagneten des Bremsdruckregelventils mit Strom beaufschlagt wird, so daß die Federkraft kompensiert wird. Beim Bremsdruckaufbau wird zunächst der Öffnungsdruck des Druckregelventils erhöht und sodann das Sperrventil für kurze Zeitintervalle geöffnet. Dies bewirkt, daß der Druckaufbau stufenartig erfolgt. Aufgrund der Kenntnis des momentanen Drucks in der Bremsbetätigungserichtung und dem Bremsdruckgeber läßt sich sehr genau die Öffnungszeit des Sperrventils festlegen, da aufgrund des berechneten Druckgefälles leicht zu ermitteln ist, wie stark der Druck in der Bremsbetätigungseinrichtung innerhalb der Öffnungszeit ansteigen wird. Dadurch kann der stufenartige Druckaufbau sehr genau an einen optimalen Druckaufbaugradienten angepaßt werden.

Außerdem kann der stufenartige Druckaufbau so ausgelegt werden, daß möglichst wenig Schaltsignale notwendig sind, was einen unmittelbaren Einfluß auf die Geräuschentwicklung hat.

Weiterhin läßt sich der Regelvorgang niederfrequent auslegen. Die in vorausgegangenen Regelzyklen gewonnenen Erkenntnisse insbesondere über die Reibverhältnisse zwischen Reifen und Fahrbahn, können in die Berechnung für den nächsten Regelzyklus eingesetzt werden, so daß im nächsten Regelzyklus der Bremsschlupf besser eingestellt werden kann, wodurch die Regelung dem Übertragungsverhalten des Regelkreises (Bremse-Rad-Straße) besser angepaßt wird.

Außerdem können bei Fahrzeugen mit einer Vorder- und einer Hinterachse Erkenntnisse über die Straßenbeschaffenheit, die durch die Auswertung der oben genannten Meßgrößen an den Vorderrädern gewonnen werden, in die Regelung für die Hinterräder einfließen.

Im folgenden soll die Erfindung anhand eines Ausführungsbeispiels, sowie einiger Diagramme geschrieben werden.

Es zeigen:
- Figur 1: die hydraulische Schaltung einer Bremsdruckregelanlage,
- Figur 2: den Druckverlauf in einer Druckabbauphase,
- Figur 3: den Druckverlauf in einer Druckaufbauphase,
- Figur 4: die Hauptbestandteile sowie die Verknüpfungen eines elektronischen Schaltkreises zur Steuerung der Anlage gemäß Figur 1 in schematischer Darstellung.

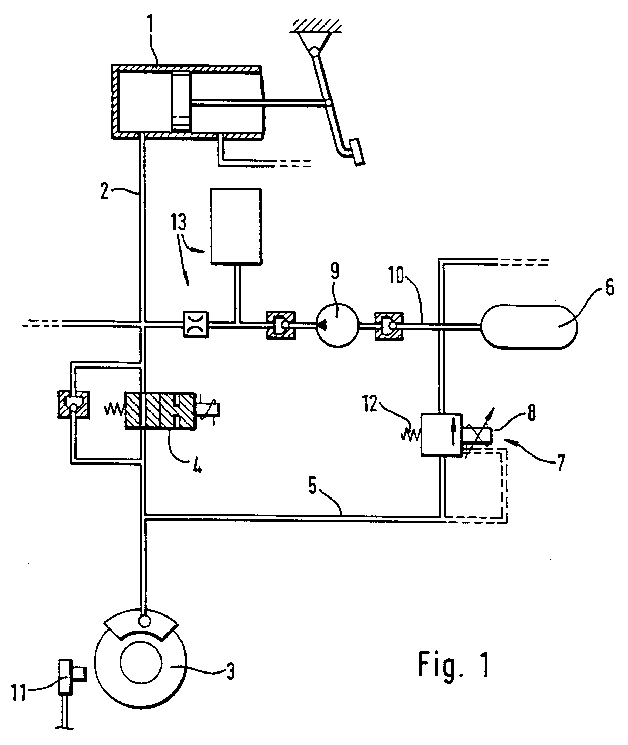

Es wird zunächst Bezug genommen auf die Figur 1. Diese zeigt in schematischer Weise eine Bremsanlage. Diese Bremsanlage enthält einen Hauptzylinder 1, der in der Regel mittels eines Pedals betätigt wird. Der Hauptzylinder ist über eine Bremsleitung 2 mit einem Radzylinder 3 verbunden. In der Bremsleitung 2 ist ein Sperr- oder Einlaßventil 4 vorgesehen, das zwei Schaltstellungen aufweist. In der Grundstellung des Ventils, die in der Zeichnung dargestellt ist, ist die Bremsleitung 2 geöffnet, in der Schaltstellung ist die Bremsleitung 2 gesperrt.

Um den Druck im Radzylinder senken zu können, ist eine Auslaßleitung 5 vorgesehen. Diese führt zu einem Niederdruckspeicher 6. In der Auslaßleitung 5 ist ein Druckbegrenzungsventil 7 vorgesehen, dessen Öffnungsruck über einen proportional arbeitenden Magneten einstellbar ist. Die einstellbare Magnetkraft des Proportionalmagneten 8 wirkt gegen eine Feder 12. Solange der Proportionalmagnet 8 stromlos ist, bestimmt die Federkraft den Öffnungsdruck des Druckbegrenzungsventils 7. Mit der Bestromung des Proportionalelektromagneten 8 wird die wirksame Kraft der Feder 12 gesenkt, so daß sich der Öffnungsdruck des Druckbegrenzungsventils 7 entsprechend ändert.

Um eine sich nicht erschöpfende Regelung durchführen zu können, ist eine Pumpe 9 vorgesehen, die Druckmittel aus dem Niederdruckspeicher 6 zurück in den Hauptzylinder 1 fördert. Die Pumpe 9 befindet sich innerhalb einer Druckleitung 10, die den Niederdruckspeicher 6 mit der Bremsleitung 2 zwischen dem Hauptzylinder 1 und dem Sperrventil 4 verbindet. Der Druckleitung 10 zugeordnet ist eine Dämpfungseinrichtung 13, mit der Druckspitze am Ausgang der Pumpe 9 eliminiert werden.

Die in der Figur 1 skizzierte Bremsanlage ist vom Typ: Rückförderprinzip. Dem Fachmann sind weitere Arten von Bremsdruckregelanlagen bekannt. Beim offenen System wird z.B. der Niederdruckspeicher 6 durch einen Vorratsbehälter ersetzt. Weiterhin sind Arten bekannt, bei denen der Druck in der Radbremse nicht direkt geregelt wird, sondern über einen Plunger vermittelt wird. Statt des Hauptzylinders 1 können auch andere Arten von Druckgebern eingesetzt werden, zum Beispiel Speicher mit nachgeschalteten pedalbetätigten Regelventilen. Der Druckgeber kann auch so ausgelegt sein, daß der Bremsbetätigungseinrichtung Druckmittel zugeführt wird, auch ohne daß dies vom Fahrer gewünscht wird. Dies ist zum Beispiel notwendig bei Antriebsschlupfregelanlagen oder sogenannten Fremdkraftbremsanlagen, die in Anlagen benötigt werden, bei denen das Fahrzeug in einem bestimmten Abstand zum vorausfahrenden Fahrzeug gehalten werden soll.

Es ist weiterhin für den Fachmann klar, daß dem Hauptzylinder weitere Bremskreise zugeordnet werden können, außerdem kann ein Bremskreis mehrere Radbremsen umfassen.

Den Rädern des Fahrzeuges werden sogenannte Radsensoren 11 zugeordnet. Diese erfassen die Winkelgeschwindigkeit des jeweiligen Rades. Die entsprechenden Sensorsignale werden einer Auswerteeinheit 40 zugeführt. Diese wiederum erzeugt Schaltsignale für das Sperrventil 4, womit das Sperrventil 4 von seiner Offen-(Grundstellung) in seine sperrende bzw. drosselnde Position (Schaltposition) schaltet. Die Auswerteeinheit erzeugt weiterhin ein Stellsignal für das Druckbegrenzungsventil 7. Sie bestimmt also die Stromstärke mit der der Stellmagnet durchflossen werden soll. Auf diese Weise wird der Öffnungsdruck des Druckbegrenzungsventils festgelegt.

Zur Regelung des Druckes im Radzylinder 3 sind verschiedene Phasen vorgesehen, nämlich eine Druckabbauphase, eine Druckhaltephase und eine Druckaufbauphase.

In der Druckabbauphase ist das Sperrventil 4 geschlossen. Der Öffnungsdruck des Druckbegrenzungsventils ist auf einen Wert eingestellt, der unterhalb des Druckes im Radzylinder 3 liegt. Daher fließt Druckmittel aus dem Radzylinder 3 in den Niederdruckspeicher 6 ab.

In der Druckhaltephase ist das Sperrventil 4 geschlossen und der Öffnungsdruck des Druckbegrenzungsventils 7 auf einen Wert eingestellt, der oberhalb des momentanen Drucks im Radzylinder 3 liegt. Der Druck im Radzylinder 3 ist daher nicht in der Lage das Druckbegrenzungsventil 7 aufzustoßen, so daß kein Druckmittel aus dem Radzylinder 3 abfließen kann.

In einer Druckaufbauphase wird das Sperrventil 4 geöffnet und der Öffnungsdruck des Druckbegrenzungsventils 7 auf einen Wert oberhalb des momentanen Radzylinderdruckes eingestellt. Dies hat zur Folge, daß aus dem Hauptzylinder 1 Druckmittel über das Sperrventil 4 zum Radzylinder fließen kann. Dies bewirkt eine Druckerhöhung, die begrenzt wird durch den eingestellten Öffnungsdruck am Druckbegrenzungsventil 7.

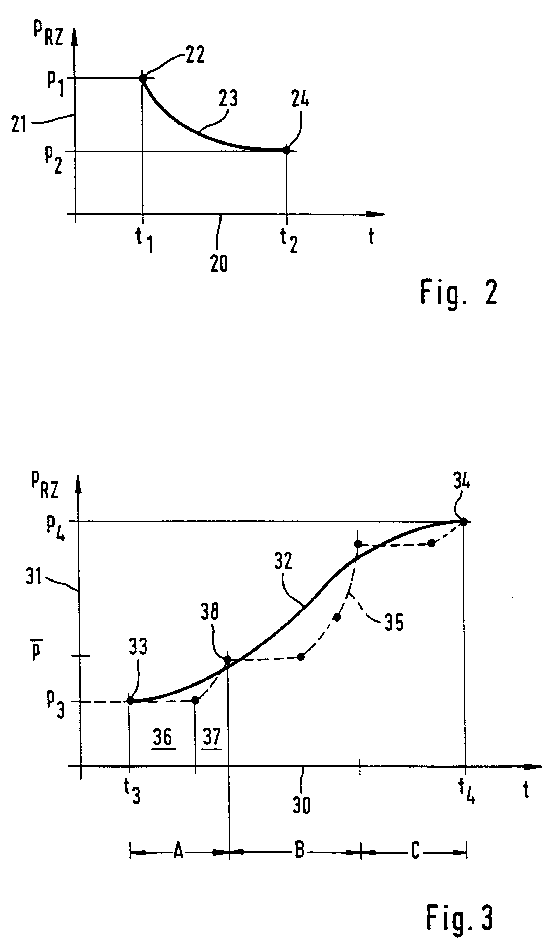

Der typische Verlauf des Drucks im Radzylinder 3 in einer Druckabbauphase und in einer Druckaufbauphase ist in den Figuren 2 und 3 dargestellt.

Die Figur 2 zeigt ein Diagramm, auf dessen X-Achse 20 die fortschreitende Zeit t abgetragen ist. Auf der Y-Achse 21 ist der Radzylinderdruck p_{Rz} abgetragen. Der Punkt 22 markiert einen bestimmten Zeitpunkt t₁ und einen bestimmten Radzylinderdruck p₁. Zu diesem Zeitpunkt t₁ ist der Öffnungsdruck des Druckbegrenzungsventils 7 größer als der Druck p₁. Wird nun der Öffnungsdruck des Druckbegrenzungsventils 7 auf einen Wert p₂ eingestellt, so fließt Druckmittel aus dem Radzylinder 3 zum Niederdruckspeicher 6 ab, was zur Folge hat, daß der Druck im Radzylinder 3 entsprechend dem Verlauf der Kurve 23 gemindert wird. Der Druckabbau erfolgt solange bis ein zweiter Punkt 24 erreicht wird, der bestimmt wird durch die Zeit t₁ und dem Radzylinderdruck p₂, der den Öffnungsdruck des Druckbegrenzungsventils 7 entspricht. Der Druckverlauf 23 wird bestimmt durch die eingestellte Druckdifferenz p₁ - p₂, sowie durch den Öffnungsquerschnitt des Druckbegrenzungsventils. Er kann dadurch manipuliert werden, daß die Änderung des Öffnungsdruckes des Druckbegrenzungsventils 7 nicht in einem Schritt erfolgt, sondern entsprechend dem gewünschten zeitlichen Verlauf der Druckabsenkung. Dies bedeutet, es werden mehrere Druckabbauschritte gemäß Figur 2 zu einer einheitlichen Druckabbauphase zusammengesetzt. Diese Eingriffsmöglichkeit ist wichtig, da eine zu schnelle Druckabsenkung zu Übersteuerungen im Regelsystem führen kann. Dies ist dem Ziel, einen möglichst konstanten optimalen Druckwert einzustellen, abträglich.

In der Figur 3 ist ein typischer Verlauf einer Druckaufbauphase dargestellt. Auf der X-Achse 30 des Diagramms ist die Zeit t dargestellt. Auf der Y-Achse 31 der Radzylinderdruck p_{rz}. Die durchgezogene Linie 32 stellt den zeitlichen Verlauf des Radzylinderdrucks dar, der für die Regelung optimal wäre. Er führt von einem Diagrammpunkt 33 zum Zeitpunkt t₃ mit dem Druck p₃ zu einem Diagrammpunkt 34 zum Zeitpunkt t₄ und dem Druck p₄. Vor dem Zeitpunkt t₃ liegt eine Druckhaltephase. An den Zeitpunkt t₄ soll sich eine Druckhaltephase oder eine Druckabbauphase anschließen.

Bei der Kurve 32 handelt es sich um ein Modell, das von der Auswerteeinheit 40, aufgrund von Daten des Radsensors 11 sowie weiteren Daten, deren Erhebung weiter unten beschrieben werden soll, errechnet wird.

Die gestrichelte Linie 35 stellt einen möglichen tatsächlichen Verlauf der Druckkurve dar. Die gestrichelte Linie soll von der idealen Linie 32 nur wenig abweichen. Dazu erfolgt der Druckaufbau in mehreren Stufen, die auf der Zeitachse mit A, B und C bezeichnet sind. Jede einzelne Stufe ist vom Prinzip gleich aufgebaut und enthält eine erste Phase 36 und eine zweite Phase 37. In der ersten Phase ist das Sperrventil noch geschlossen. Der Öffnungsdruck des Druckbegrenzungsventils 7 wird auf einen ersten Wert p gesetzt, der am Ende einer Stufe erreicht sein soll. Da der Öffnungsdruck des Druckbegrenzungsventils 7 größer ist als der momentane Radzylinderdruck, und das Sperrventil 4 geschlossen ist, bleibt der Druck im Radzylinder 3 konstant. Am Ende der ersten Phase 36 zu einem Zeitpunkt t_{3'} wird das Sperrventil geöffnet. Nun kann Druckmittel aus dem Hauptzylinder 1 zum Radzylinder 3 fließen. Der Druck steigt, bis der eingestellte Öffnungsdruck des Druckbegrenzungsventils 7 erreicht ist.

Der Druckverlauf in der zweiten Phase 37 wird bestimmt durch den Drosselquerschnitt des Sperrventils 4 sowie der Druckdifferenz zwischen dem Hauptzylinder 1 und dem Radzylinder 3.

Der erreichte Punkt ist im Diagramm mit 38 bezeichnet, dem Beginn einer neuen Druckaufbaustufe.

Der Zeitpunkt t_{3'} sowie der voreingestellte Druck p wird von der Auswerteeinheit 40 errechnet, wie weiter unten dargestellt wird.

Die weiteren Schritte B und C entsprechen im Prinzip dem Schritt A. Sie bestehen ebenfalls aus einer ersten und zweiten Phase wobei der jeweils voreingestellte Druck p und der Umschaltzeitpunkt t bezogen auf die Dauer des Schrittes geändert werden kann.

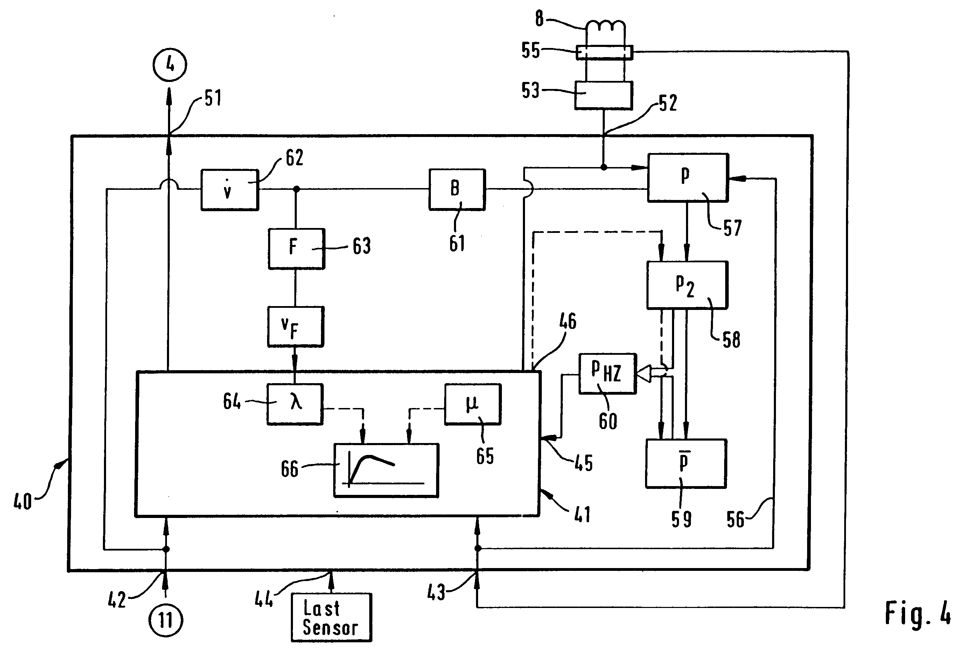

Um die notwendigen Daten zu erhalten, die notwendig sind, um den jeweils beabsichtigten Druckverlauf einzustellen, wird zunächst der Radzylinderdruck ermittelt. Eine Erläuterung des Verfahrens erfolgt anhand der Figur 4. Hierbei handelt es sich um ein schematisch dargestelltes Blockschaltbild. Mit 40 ist die gesamte Auswerteeinheit bezeichnet, die als Kernstück einen Signalgenerator 41 enthält.

Die Auswerteeinheit 40 enthält mehrere Eingänge. An einem Eingang 42 ist der Radsensor 11 (Figur 1) angeschlossen. An diesem Eingang liegen daher Informationen über die momentane Winkelgeschwindigkeit des Rades vor. Nicht dargestellt sind die Anschlüsse der Radsensoren der weiteren Räder des Fahrzeuges. An einem weiteren Eingang 43 ist eine Meßeinrichtung 55 angeschlossen, die Induktionsänderungen der Betätigungsspulen 8 des Druckbegrenzungsventils 7 erfaßt. Auch hier sind entsprechend der Anzahl der Druckbegrenzungsventile 7 in der Bremsanlage mehrere Eingänge vorgesehen. Ein weiterer Eingang 44 empfängt ein Signal, das dem Fahrzeuggewicht bzw. der Lastverteilung auf die Achsen des Fahrzeuges entspricht. Weiterhin sind Ausgänge vorgesehen. Ein Signal am Ausgang 51 bewirkt ein Umschalten des Sperrventils 4. Entsprechend der Anzahl der Sperrventile 4 in der Regelanlage sind mehrere Ausgänge 51 vorgesehen. Ein weiterer Ausgang 52 führt zu einer Einrichtung 53, das die Stromversorgung der Spule 8 des Druckbegrenzungsventils 7 regelt. Auch hier spricht die Anzahl der Ausgänge 52 der Anzahl der Druckbegrenzungsventile 7. Wie schon erläutert steht der Spulenstrom in einem definierten Verhältnis zum Öffnungsdruck des Druckbegrenzungsventils 7. Das Stellsignal am Ausgang 52 repräsentiert daher den Öffungsdruck des Druckbegrenzungsventils 7.

Im Versorgungskreis für die Spule 8 ist eine Beobachtungseinrichtung 55 vorgesehen. Diese Beobachtungseinrichtung 55 reagiert auf Strom- bzw. Spannungsänderungen im Versorgungskreis für die Spule 8, die sich ergeben, wenn die Induktivität der Spule 8 sich aufgrund einer Bewegung des Ankers ändert. Wie oben erläutert, weist eine derartige Bewegung stets auf einen Öffnungs- oder Schließvorgang des Druckbegrenzungsventils 7 hin. Dieses Signal wird auf den entsprechenden Eingang 43 geleitet. Der Eingang 43 ist direkt mit dem Signalgenerator 41 verbunden. Eine Leitung 56 führt aber auch zu einer Ausleseeinheit 57. Jedesmal wenn am Eingang 43 ein Signal anliegt, wird das Signal am Ausgang 52 ausgelesen und als Druckwert p in der Ausleseeinheit 57 gespeichert. Wie schon erläutert, entspricht bei Schließ- oder Öffnungsvorgängen des Druckbegrenzungsventils 7 der eingestellte Öffnungsdruck dem aktuellen Radzylinderdruck. Es wird deutlich, daß auf diese Weise eine Druckmessung erfolgt, ohne daß ein gesonderter Drucksensor notwendig wäre. Der Ausleseeinheit 57 sind weitere Speicher 58, 59 nachgeschaltet, die besondere Druckwerte zu speziellen Zeitpunkten speichern. Die Auslesung der besonderen Druckwerte aus der Ausleseeinheit 57 erfolgt aufgrund eines Stellsignals, das vom Signalgenerator 41 an einem Ausgang 46 erzeugt wird. In dem einen Speicher 59 wird der Druck am Ende einer Druckabbauphase gespeichert (Punkt 24 aus Figur 2). Dieser Druck entspricht dem Druck zum Beginn einer Druckaufbauphase (Punkt 33 in Figur 3). Im Speicher 58 wird der Druck am Ende eines ersten Aufbauschritts gespeichert (Punkt 38 in Figur 3).

Die beiden Speicherwerte werden einer Berechnumgseinheit 60 zugeführt, die den Hauptzylinderdruck berechnet. Dieser ermittelt sich aus der Differenz der beiden oben genannten Drücke, der Zeitdauer für die Öffnung des Sperrventils 4 innerhalb des ersten Druckaufbauschritts A sowie den bekannten Daten des Sperrventils 4 bezüglich seiner hydraulischen Auslegung. Der errechnete Hauptzylinderdruck wird dem Signalgenerator 41 in einem Eingang 45 zugeführt und eingesetzt, um einen Druckaufbau zu berechnen, der dem idealen Druckaufbau sehr nahe kommt. Dazu wird, was im einzelnen nicht dargestellt ist, der Radzylinderdruck aus dem Speicher 59 ausgelesen und aus dem Vergleich mit dem Hauptzylinderdruck aus der Berechnungseinheit 60 die benötigte Öffnungszeit für das Sperrventil errechnet, um einen idealen Druckaufbau zu erreichen.

Die Werte aus der Ausleseeinheit 57 können zusammen mit den Signalen des Radsensors dazu benutzt werden den jeweiligen Radschlupf zu ermitteln. In Kombination mit Signalen eines Lastsensors kann auch der Reibbeiwert ermittelt werden.

Dazu wird zunächst aus dem Druckwert, der in der Ausleseeinheit 57 abgelegt ist, die Betätigungskraft B ermittelt (Einheit 61). Aus den Radsensorsignalen am Eingang 42 kann die Radverzögerung berechnet werden (Einheit 62). Aus der Betätigungskraft B und der Radverzögerung 62 ermittelt sich die Bremskraft also die Kraft F, die zwischen Reifen und Fahrbahn wirkt. Diese Berechnung erfolgt in der Einheit 63 und kann zum Beispiel nach den Grundsätzen erfolgen, wie sie in der oben genannten britischen Offenlegungsschrift genannt worden sind.

Unter Kenntnis der Geschwindigkeit zu Beginn der Bremsung erhält man durch Aufintegration der Bremskraft die momentane Fahrzeuggeschwindigkeit. Da der Druck in der Radbremse nicht kontinuierlich gemessen wird, sondern in Abständen, wird es notwendig sein, die Druckwerte bzw. die daraus resultierenden Bremskräfte zu intrapolieren.

Die Fahrzeuggeschwindigkeit kann nun mit den Raddrehgeschwindigkeiten kombiniert werden und der jeweilige Radschlupf ermittelt werden (Speicher 64 im Signalgenerator 41).

Zur Bremskraft in der als Speicher ausgebildeten Einheit 63 kann unter Berücksichtigung der Last, die von einem Lastsensor ermittelt wird, der momentane Gleitbeiwert ermittelt werden. Dieser kann im Speicher 65 im Signalgenerator abgelegt werden.

Da während einer Bremsung das Rad verschiedene Schlupfwerte durchläuft, kann die Kraftbeiwert/Schlupfkurve des Rades für die aktuelle Straßenoberfläche ermittelt werden. Diese kann in einem Speicher 66 abgelegt werden und durch einige wenige Parameter charakterisiert werden.

In diesem Speicher 66 werden nach und nach Kurven für verschiedene Oberflächen abgelegt.

Bei einer erneuten Bremsung unter ähnlichen Bedingungen kann die entsprechende Kurve schon nach ein oder zwei Messungen von Schlupf/Kraftbeiwertpaaren ermittelt werden und im weiteren Berechnungen für den Regelverlauf zugrunde gelegt werden. Man kann sagen, daß das System selbstlernend ist, sich also die Parameter der Straßen Reifenkombination mit der Zeit selbst erarbeitet und laufend korrigiert.

Der Signalgenerator soll auch ein Abgleich zwischen den Vorder- und Hinterrädern enthalten. Damit ist gemeint, daß der ermittelte aktuelle Reibbeiwert bzw. die aktuelle Schlupfreibbeiwertkurve, die an den Vorderrädern ermittelt wird, in aller Regel auch für die Hinterräder gilt, da diese in der gleichen Spur fahren. Zumindest kann die an den Vorderrädern ermittelte Schlupf Reibwertkurve in erster Näherung dem Regelvorgang für die Hinterräder zugrunde gelegt werden.

## Patentansprüche

1. Bremsdruckregelanlage mit einem Bremsdruckgeber (1), einer Bremsbetätigungseinricntung (3) für mindestens ein Fahrzeugrad, einer Verbindungsleitung (2) zwischen dem Bremsdruckgeber (1) und der Bremsbetätigungseinrichtung (3), einem Sperrventil (4) in der Verbindungsleitung (2), das zwei Schaltstellungen aufweist, wobei in der Grundstellung des Sperrventils (4) die Verbindungsleitung (2) geöffnet und in der Schaltstellung des Sperrventils (4) die Verbindungsleitung (2) geschlossen bzw. gedrosselt ist, mit einer Auslaßleitung (5), die die Bremsbetätigungseinrichtung (3) mit einem Druckmittelsammler (6) verbindet, einem elektromagnetisch betätigten Druckbegrenzungsventil (7) in der Auslaßleitung (6), einem Radsensor (11), der die Drehgeschwindigkeit des Fahrzeugrades erfaßt und ein entsprechendes Sensorsignal abgibt, und einer elektrischen Steuer- und Auswerteeinheit (40), die einen Eingang (42) für das Sensorsignal aufweist und einen ersten Schaltausgang (51), wobei an diesem Ausgang ein Schaltsignal für das Sperrventil (4) anliegt, und einen als Stellausgang (52) ausgeführten weiteren Ausgang, der ein Steuersignal für die Stromversorgung (53) der Spule (8) des Druckbegrenzungsventils (7) abgibt, das die Spulenstromstärke bestimmt, dadurch **gekennzeichnet**, daß dem Spulenstromkreis eine Meßeinrichtung (55) zugeordnet ist, die eine Strom/Spannungsänderung aufgrund einer Änderung der Induktion der Spule (8) ermittelt und ein entsprechendes Signal auf einen weiteren Eingang (43) der Auswerteeinheit (40) gibt, und daß die Auswerteeinheit (40) zum Zeitpunkt des Eingangs des Ventilsignals an ihrem weiteren Eingang (43) einen Wert speichert, der dem Spulenstrom entspricht, wobei dieser Wert in einem Bremsdruckwert umgerechnet und in einem Auslesespeicher (57) zwischengespeichert wird, und daß der Bremsdruckwert in das Regelverfahren zur Einstellung eines optimalen Schlupfwertes einfließt.

2. Bremsdruckregelanlage nach Anspruch 1, dadurch **gekennzeichnet**, daß die Auswerteeinheit (40) so ausgebildet ist, was bei nötigwerdendem Druckabbau am Schaltausgang (51) ein Signal gesetzt wird, daß das Sperrventil (4) von der Grund- in die Schaltstellung bringt, und daß am Stellausgang (52) ein Stellsignal angelegt wird, so daß die Spule des Druckregelventils (7) mit Strom entsprechend einem kleiner werdenden Öffnungsdruck versorgt wird.

3. Bremsdruckregelanlage nach Anspruch 1, dadurch **gekennzeichnet**, daß die Auswerteeinheit (40) so ausgelegt ist, daß bei einem notwendig werdenden Druckaufbau am Stellausgang (52) ein Stellsignal gesetzt wird, das einem höheren Öffnungsdruck als dem zuletzt gesetzten entspricht und daß am Schaltausgang (51) ein Schaltsignal gesetzt wird, so daß das Sperrventil (4) zumindest kurzzeitig in die Offenstellung gesetzt wird.

## Claims

1. Braking pressure control system including a braking pressure generator (1), a brake-actuating device (3) for at least one vehicle wheel, a connecting line (2) between the braking pressure generator (1) and the brake-actuating device (3), a shut-off valve (4) in the connecting line (2) which has two switching positions, the connecting line (2) being open in the basic position of the shut-off valve (4) and the connecting line (2) being closed or throttled in the switched position of the shut-off valve (4), including an outlet line (5) which connects the brake-actuating device (3) with a pressure fluid collecting means (6), an electromagnetically operated pressure-limiting valve (7) in the outlet line (6), a wheel sensor (11) which senses the rotational speed of the vehicle wheel and issues a corresponding sensor signal, and an electrical controlling and evaluating unit (40) which has an input (42) for the sensor signal and a first switching output (51) to which a switching signal for the shut-off valve (4) is applied, and another output configured as a controlling output (52) which issues a control signal for the current-supply circuit (53) of the coil (8) of the pressure-limiting valve (7) which determines the intensity of the coil current,
**characterized** in that a measuring device (55) is associated with the coil circuit, determines a current/voltage variation due to a change in the induction of the coil (8) and sends a corresponding signal to another input (43) of the evaluating unit (40, and in that the evaluating unit (40) memorizes a value which corresponds to the coil current at the time the valve signal is received at its further input (43), and this value is converted into a braking pressure value and is intermediately stored in a read-out memory (57), and in that the braking pressure value is taken into account for the control process for adjusting an optimal slip value.

2. Braking pressure control system as claimed in claim 1,
**characterized** in that the evaluating unit (40) is so designed that when pressure decrease becomes necessary, a signal is issued at the switching output (51) causing the shut-off valve (4) to change from its basic position to its switched position, and in that a control signal is applied to the control output (52) so that the coil of the pressure control valve (7) is supplied with current corresponding to a decreasing opening pressure.

3. Braking pressure control system as claimed in claim 1,
**characterized** in that the evaluating unit (40) is so designed that when pressure increase becomes necessary, a control signal is issued at the control output (52) which corresponds to an opening pressure that is higher than the preceding one set, and in that a switching signal is set at the switching output (51) so that the shut-off valve (4) is set to its open position at least for a short time.

## Revendications

1. Dispositif de régulation de pression de frein, comprenant un générateur de pression de frein (1), un dispositif d'actionnement de frein (3), associé à au moins une roue de véhicule, une conduite de liaison (2), disposée entre le générateur de pression de frein (1) et le dispositif d' actionnement de frein (3), une valve le de blocage (4), disposée dans la conduite de liaison (2) et présentant deux positions de commutation, la conduite de liaison (2) étant ouverte dans la position de base de la valve de blocage (4) et la conduite de liaison (2) étant fermée ou étranglée dans la position commutée de la valve de blocage (4), une conduite de sortie (5), reliant le dispositif d'actionnement de frein (3) à un accumulateur d'agent de pression (6), une valve de limitation de pression (7) à actionnement électromagnétique, disposée dans la conduite de sortie (6), un capteur de roue (11), qui détecte la vitesse de rotation de la roue de véhicule et délivre un signal de capteur correspondant, et une unité de commande et d'analyse électrique (40) qui comporte une entrée (42) pour le signal de capteur, une première sortie de commutation (51), un signal de commutation destiné à la valve de blocage (4) étant présent sur cette sortie, et une autre sortie qui est réalisée en tant que sortie de réglage (52) et délivre, à destination de l'alimentation en courant (53) de la bobine (8) de la valve de limitation de pression (7), un signal de commande qui détermine l'intensité de courant de bobine, caractérisé en ce qu'un dispositif de mesure (55) est associé au circuit de courant de bobine, ce dispositif de mesure déterminant une variation de courant/de tension sur la base d'une variation de l'induction de la bobine (8) et délivrant un signal correspondant sur une autre entrée (43) de l'unité d'analyse (40), en ce qu'à l'instant de l'entrée du signal de valve sur son autre entrée (43), l'unité d'analyse (40) range en mémoire une valeur qui correspond au courant de bobine, cette valeur étant transformée par calcul en une valeur de pression de frein et étant rangée provisoirement dans une mémoire de lecture (57), et en ce que la valeur de pression de frein entre dans le procédé de régulation servant à régler une valeur de glissement optimale.

2. Système de régulation de pression de frein suivant la revendication 1, caractérisé en ce que l'unité d'analyse (40) est agencée de façon telle que, lorsqu'une suppression de pression devient nécessaire, un signal est placé sur la sortie de commutation (51), ce signal amenant la valve de blocage (4) de la position de base à la position de commutation, et en ce qu'un signal de réglage est appliqué sur la sortie de réglage (52), de sorte que la bobine de la valve de régulation de pression (7) est alimentée en courant en fonction d'une pression d'ouverture qui devient plus petite.

3. Système de régulation de pression de frein suivant la revendication 1, caractérisé en ce que l'unité d'analyse (40) est agencée de façon que, lorsqu'un établissement de pression devient nécessaire, un signal de réglage est placé sur la sortie de réglage (52), ce signal correspondant à une pression d'ouverture supérieure à la dernière qui a été fixée et en ce qu'un signal de commutation est placé sur la sortie de commutation (51), de sorte que la valve de blocage (4) est placée au moins brièvement dans la position ouverte.
